# EUROPEAN PATENT SPECIFICATION

(11) **EP 1 247 089 B1**
(45) Date of publication and mention of the grant of the patent: **23.07.2008**
(21) Application number: 00992511.6
(22) Date of filing: 15.11.2000
(51) Int. Cl.: G01N 27/12

(54) **CARBON NANOTUBE DEVICES**
KOHLENSTOFF-NANO-RÖHRCHEN-VORRICHTUNG
DISPOSITIFS DE NANOTUBES DE CARBONE

(30) Priority: 15.12.1999 US 171200 P
(43) Date of publication of application: 09.10.2002
(73) Proprietor: BOARD OF TRUSTEES OF THE LELAND STANFORD JUNIOR UNIVERSITY, Palo Alto, CA 94304 (US)
(72) Inventor: DAI, Hongjie, Sunnyvale, CA 94086 (US); KONG, Jing, Menlo Park, CA 94062 (US)
(74) Representative: Picker, Madeline Margaret
(86) International application number: PCT/US2000/042186
(87) International publication number: WO 2001/044796

(56) References cited:
- US-A- 5 334 351
- US-A- 5 726 524
- US-A- 5 866 434
- US-A- 5 872 422
- APPLIED PHYSICS LETTERS, vol. 75, no. 5, 2 August 1999 (1999-08-02), pages 627-629, XP002234177
- TANS S J ET AL: "ROOM-TEMPERATURE TRANSISTOR BASED ON A SINGLE CARBON NANOTUBE" NATURE, MACMILLAN JOURNALS LTD. LONDON, GB, vol. 393, May 1998 (1998-05), pages 49-52, XP002929421 ISSN: 0028-0836
- KONG ET AL: "Nanotube molecualr wires as chemical sensors" SCIENCE, AMERICAN ASSOCIATION FOR THE ADVANCEMENT OF SCIENCE,, US, vol. 287, 28 January 2000 (2000-01-28), XP002215277 ISSN: 0036-8075
- LEE ET AL.: "Conductivity enhancement in single-walled carbon nanotube bundles doped with K and Br" NATURE, 17 July 1997 (1997-07-17), pages 255-257, XP002234178
- KONG J ET AL: "SYNTHESIS OF INDIVIDUAL SINGLE-WALLED CARBON NANOTUBES ON PATTERNED SILICON WAFERS" NATURE, MACMILLAN JOURNALS LTD. LONDON, GB, vol. 395, 29 October 1998 (1998-10-29), pages 878-881, XP000960753 ISSN: 0028-0836
- DAGANI: 'Much ado about nanotubes' C & E NEWS 11 January 1999, pages 31 - 34, XP002940417
- DAI ET AL.: 'Nanotubes as nanoprobes in scanning probe microscopy' NATURE vol. 384, 14 November 1996, pages 147 - 150, XP002940418

## Description

### CROSS-REFERENCE TO RELATED APPLICATIONS

This application is related to US patent application Serial No. 09/133,948 filed 14 August 1998.

### STATEMENT REGARDING FEDERALLY SPONSORED RESEARCH OR DEVELOPMENT

This invention was made with US Government support under 9871947 awarded by the National Science Foundation. The US Government has certain rights in this invention.

### FIELD OF THE INVENTION

This invention relates generally to nanotube devices. More particularly, it relates to a new class of nanotube chemical and biological sensors.

### BACKGROUND ART

Sensing chemical and biological species plays an important role in many industrial, agricultural, medical, and environmental processes. Detection of NO₂ gas, for example, provides a crucial measure of environmental pollution due to combustion or automotive emissions. The amount of NH₃ also needs to be closely monitored in industrial, medical and living environments. Moreover, there is a growing need to detect biological species in a variety of biomedical applications.

Chemical sensors in the prior art commonly employ solid state materials, such as semiconducting metal oxides, as sensing agents. The sensing is achieved by detecting change in electrical resistance of the sensor resulted from adsorption of foreign chemical species onto the sensing material. In order to achieve significant sensitivity, however, sensors of this type must operate at elevated temperatures so to enhance chemical reactivity. Other drawbacks of these prior art sensors include long recovery times (if not rendering irreversibility), poor reproducibility, and very limited range of chemical species each sensor is able to detect.

In view of the above, there is a need in the art for sensing devices that provide not only significant and robust, but more advantageously, tunable response to a variety of chemical and biological species.

### SUMMARY OF THE INVENTION

The present invention comprises a molecular sensor comprising: a) a nanotube device comprising at least one carbon nanotube, wherein a first end of said nanotube is in electrical contact with a first conducting element and a second end of said nanotube is in electrical contact with a second conducting element; and b) a coating of one or more sensing agents deposited on said nanotube; wherein said sensing agents are so chosen such that the agents-coated nanotube responds to a particular molecular species.

The sensing agents may comprise one or more materials selected from the group consisting of metal particles, polymers, and biological species, and preferably including gold, platinum, nickel, rhodium, palladium, TiO₂, thiol, and enzymes.

The nanotube may be semiconducting.

The molecular sensor may further comprise a voltage source applying a gating voltage to said nanotube, wherein said gating voltage is so chosen such that said nanotube, biased with said gating voltage, responds to a particular molecular species. The gating voltage may be in the range of-20 to 20 Volts.

The at least one nanotube may be a single-walled nanotube.

At least one of said conducting elements may comprise an island of a catalyst material covered by a metal electrode, and at least one of said ends of said nanotube may be rooted in said catalyst island and covered by said metal electrode. The metal electrode may comprise an alloy of nickel-gold or titanium-gold. The catalyst material may be selected from a groups consisting of iron, molybdenum, cobalt, nickel, ruthenium, zinc and oxides thereof or may comprise Fe₂O₃ and alumina nanoparticles.

The catalyst island may be in the range of 3-5 microns in size.

At least one of said conducting elements may comprise a metal pad (33) covering at least one of said ends of said nanotube, and said metal pad may comprise a material selected from the group consisting of titanium, gold, aluminium, chromium, and platinum.

The nanotube devices of the present invention demonstrate high sensitivity, robust response, and a tunable selectivity to a wide range of molecular species. They operate in gaseous and liquid environments.

The novel features of the present invention will be best understood from the following drawings and detailed description.

### BRIEF DESCRIPTION OF THE FIGURES

FIGS. 1A-1C depict a method for synthesizing individually distinct nanotubes on a substrate;
FIG. 2 illustrates an exemplary embodiment of a nanotube device comprising a single nanotube;
FIGS. 3A-3B show a method for making a nanotube film device;
FIG. 4 displays electrical response of a single nanotube device to NO₂ and NH₃, respectively;
FIG. 5 shows electrical response of a gold-decorated single nanotube device to thiol vapor;
FIG. 6 displays electrical responses of an as-grown nanotube film device and a PMMA-coated nanotube film device to NO₂ gas;
FIGS. 7A-7B show electrical response of a gold-decorated nanotube film device to thiol vapor and the detection of avidin using a thiol-coated-gold-decorated nanotube film device; and
FIG. 8 displays the detection of H₂ using a platinum-modified nanotube film device.

### DETAILED DESCRIPTION OF THE INVENTION

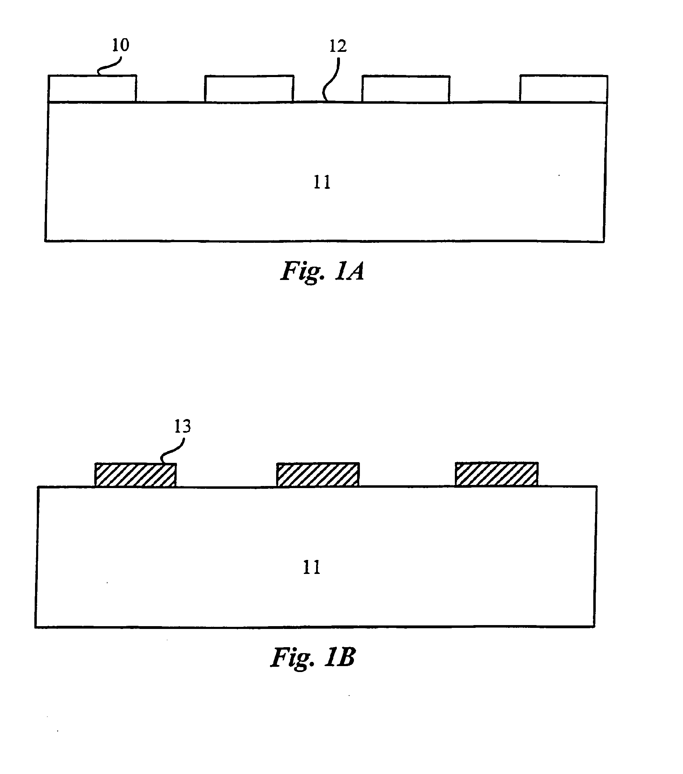

FIGS. 1A-1C illustrate a method for synthesizing individually distinct nanotubes on a silicon substrate that is patterned with catalyst islands. The principle procedures of the method have been reported in the art by the inventors (Nature 395,878 (1998)). First, a layer of resist 10 is disposed and patterned on a top surface of a substrate 11, as illustrated in FIG. 1A. The substrate 11 is made of doped silicon with a layer of native oxide. Patterning on the resist 10 is typically performed by electron-beam lithography, producing holes 12 that expose the underlying substrate 11. The holes 12 are typically 5 microns in size, spaced at a distance of 10 microns apart. Next, a few drops of a catalyst material are placed on the surface of the substrate 11, filling the holes 12. The catalyst preparation includes mixing 15mg of alumina nanoparticles, 0.05 mmol of Fe(NO₃)₃ 9H₂O, and 0.015 mmol of MoO₂ (acac)₂ in 15ml of methanol. 1.

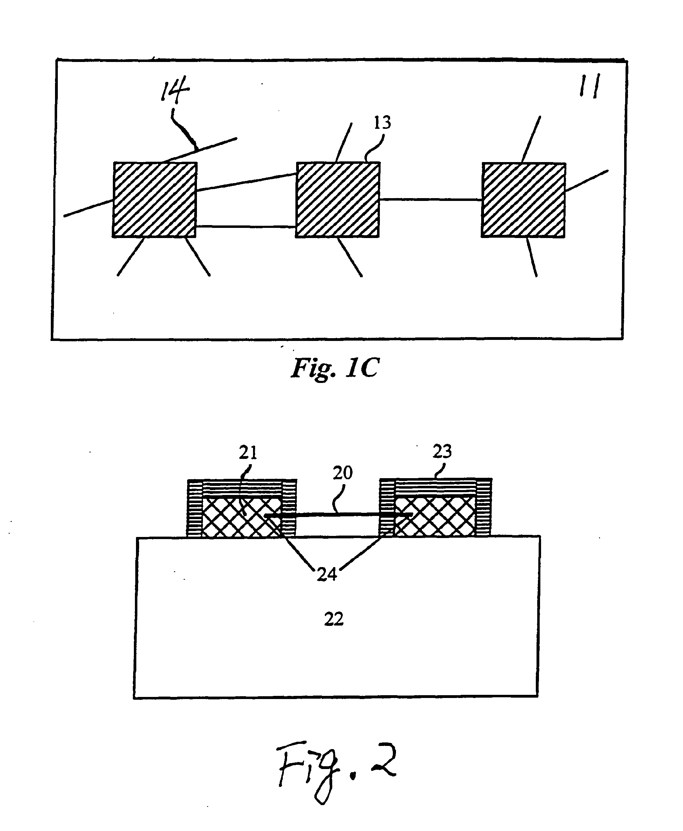

After the solvent (i.e., methanol) dries, the remaining resist is lifted off, revealing an array of isolated catalyst islands 13 on the substrate 11, as shown in FIG. 1B. The catalyst- patterned substrate is then heated in a tube furnace to above 900°C while exposed to a flow of methane. Heating decomposes Fe(NO₃)₃ to Fe₂O₃. The Fe₂O₃/nanoparticles mixture is capable of catalyzing the growth of carbon nanotubes when exposed to methane gas at elevated temperatures. The carbon nanotubes thus grown are predominantly individually distinct, single- walled nanotubes with few structural defects. FIG. 1C shows these nanotubes 14 emanated from the catalyst islands 13 on the substrate 11. They are found to be substantially straight, typically extending up to more than 10 microns in length with diameters ranging from 1-3 nanometers. Moreover, a number of the nanotubes are bridging adjacent islands. A nanotube bridge forms when a tube growing from one catalyst island falls on and interacts with another island during the synthesis process as described.

In general, the substrate can be made of a material selected from a group consisting of silicon, alumina, quartz, silica and silicon nitride. The catalyst islands comprise a material selected from a group including iron, molybdenum, cobalt, nickel, ruthenium, zinc and oxides thereof. The nanotubes can be semiconducting, or metallic.

In addition to carbon, nanotubes made of other materials (e. g., silicon) can also be grown by following a synthesis process similar to what is described above. Those skilled in the art will be able to implement the corresponding synthesis procedures.

The nanotube chip thus produced can be incorporated into a variety of electronic and mechanical devices. A device comprising a single nanotube can also be readily made. Using an AFM (atomic force microscopy) tip, the nanotubes bridging two catalyst islands are cut mechanically or electrically until a single tube remains. Electron-beam lithography is then employed to deposit metal electrodes onto the two catalyst islands bridged by the nanotube. The electrodes are typically made of an alloy of nickel-gold, or titanium-gold. For example, they can be 20 nanometers of nickel with 60 nanometers gold on top. These electrodes provide electrical connections between the nanotube and macroscopic electronic circuits. FIG. 2 shows an exemplary embodiment of a nanotube device comprising a single nanotube 20 disposed between two catalyst islands 21 on a substrate 22. Two metal electrodes 23 are made to fully cover respective catalyst islands 21, including the two ends 24 of the bridging nanotube 20.

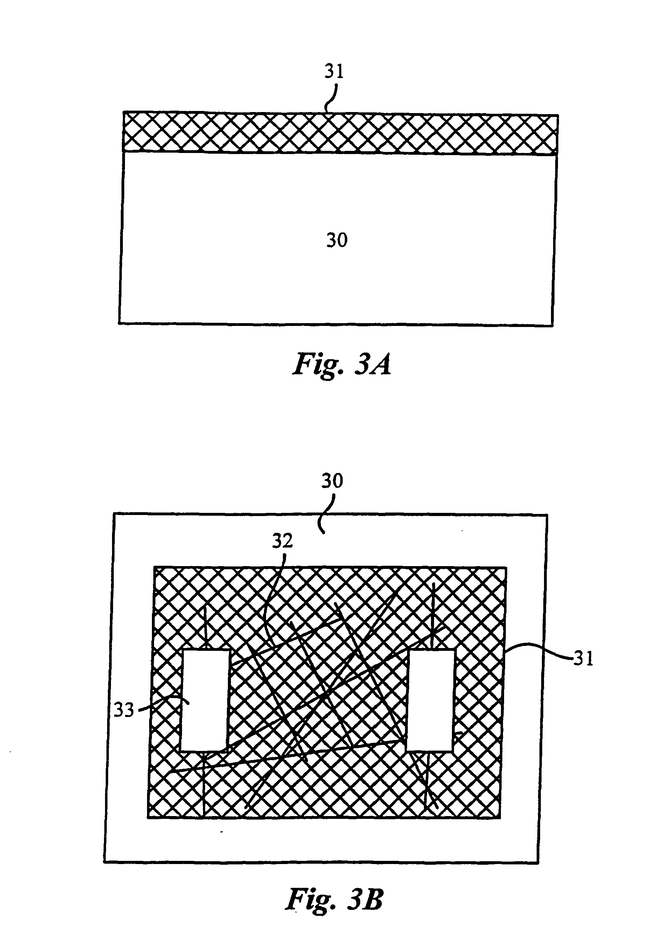

FIGS. 3A-3B show a method for synthesizing a film of nanotubes on a substrate that is initially covered with a layer of catalyst. First, a quartz substrate 30 is coated with a layer of catalyst 31 by spin-coating, as shown in FIG. 3A. The catalyst is typically prepared by mixing 15mg of alumina nanoparticles, 0.05 mmol of Fe (NO₃)₃ 9H₂O, and 0.015 mmol of MoO₂ (acac)₂ in 15 ml of methanol. The catalyst-covered substrate is then heated to above 900°C in a flow of methane, yielding a film of interconnected single-walled carbon nanotubes 32 on the substrate, as shown in FIG. 3B. Two metal electrodes 33, each comprising 20 nanometers of titanium followed by 60 nanometre of gold, are then evaporated onto the nanotube film through a shadow mask, such that there is a metal-free gap forming between the two electrodes 33. Such a nanotube film device can be easily produced in a scaled-up fashion with low cost.

The substrate in FIGS. 3A-3B is typically made of a material selected from a group consisting of silicon, alumina, quartz, silica and silicon nitride. The catalyst islands comprise a material selected from a group including iron, molybdenum, cobalt, nickel, ruthenium, zinc and oxides thereof. The nanotubes can be semiconducting, or metallic. The electrodes is typically made of an alloy of nickel-gold, or titanium-gold.

The nanotube devices described above can be further physically or chemically modified, so as to be tailored for a particular application. A semiconducting or metallic carbon nanotube exhibits inherent change in electrical conductance when exposed to certain chemical gases, resulted from adsorption of the gas particles on the nanotube. More significantly, by depositing one or more sensing agents onto the nanotube, its sensitivity to a wide range of chemical and biological species can be achieved. The selectivity of the nanotube to chemical species can be also tuned by applying a gating voltage to the nanotube.

The gating voltage effectively shifts the Fermi energy level of the nanotube, enabling the nanotube to be more responsive to a particular species. The embodiments described hereinafter demonstrate the functionality and versatility of the present invention.

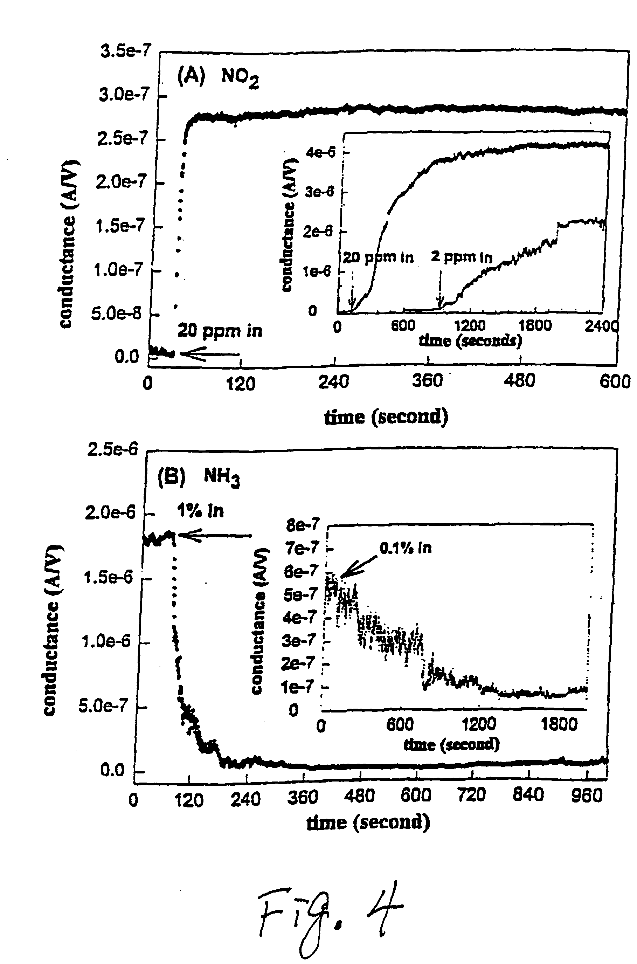

FIG. 4 displays electrical responses of a device comprising a semiconducting single-walled carbon nanotube to various amounts of NO₂ and NH₃ gas, respectively. The gas sensing is carried out by enclosing the device in a glass flask. The flask is equipped with electrical feedthrough that makes electrical connections between the device and the electrical measurement circuits on the outside. It also permits a flow of gas. A carrier gas (e. g., Ar or air), diluted with NO₂ or NH₃, then flows through the flask, while the electrical response of the nanotube is recorded. The device displays fast and significant response to the arrival of NO₂ and NH₃, respectively. Moreover, after each gas sensing measurement, the electrical characteristics of the nanotube is able to fully recover in a flow of pure carrier gas over a period of several hours.

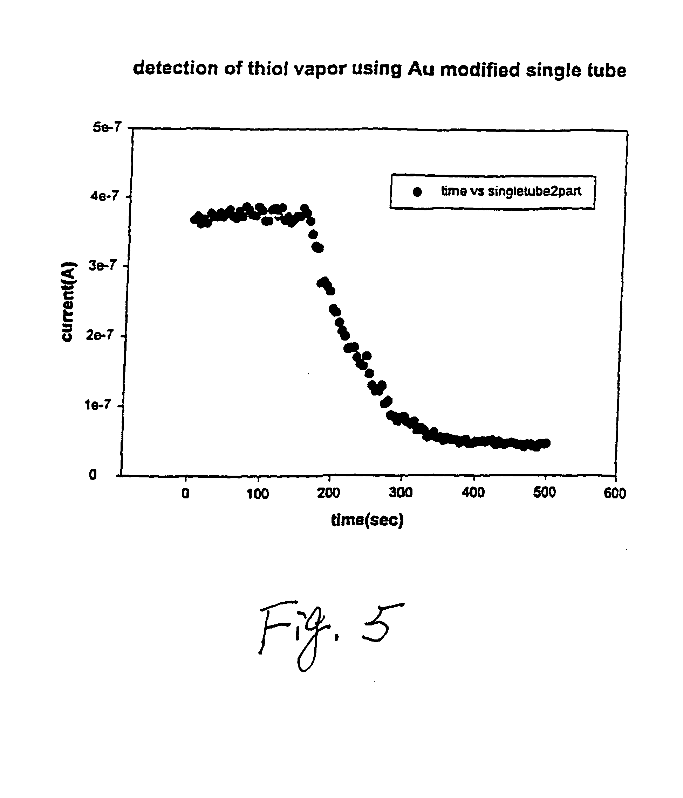

FIG. 5 shows electrical response of a gold-decorated single nanotube to thiol vapor. Gold is deposited on the nanotube by evaporation. Since it does not wet carbon, the evaporated gold particles decorate, rather than forming a continuous layer on the nanotube. The observed response to thiol results from the presence of the gold particles in this case, since the carbon nanotube alone does not respond to thiol. Given that many biological molecules like to link themselves onto thiol, by attaching a layer of thiol to a gold-decorated nanotube, this composite system promises to be a versatile biological sensor.

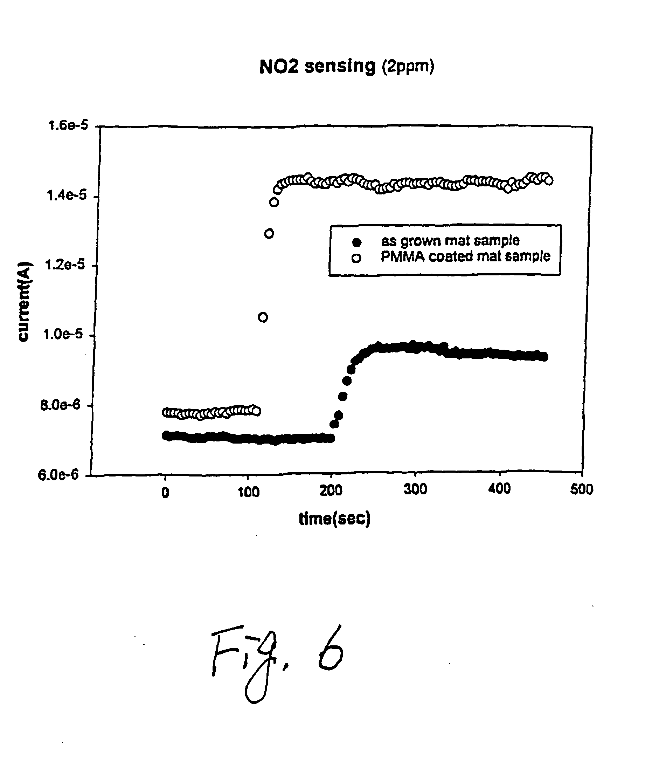

FIG. **6** shows electrical responses of an as-grown nanotube film (mat) device and a PMMA(polymethylmethacrylate)-covered nanotube film (mat) device to NO₂ gas. The PMMA coating in the later case is typically about 100 nanometers thick, and its presence significantly improves the sensitivity and the response time of the nanotube device to NO₂.

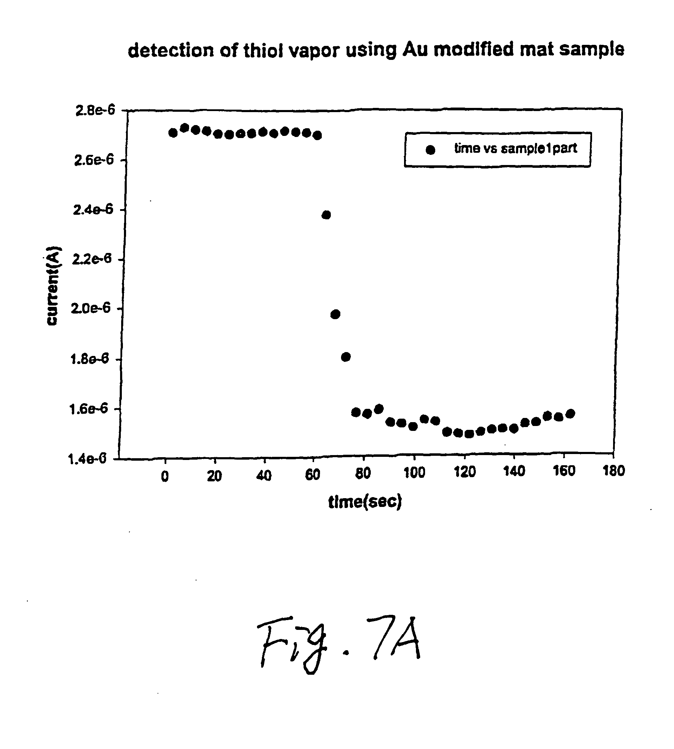

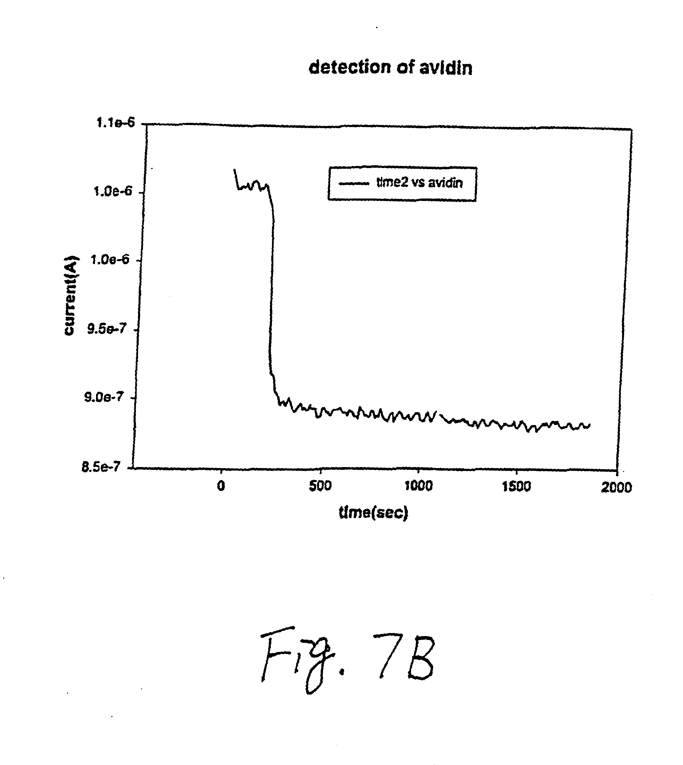

FIG. **7A** displays electrical response of a gold-decorated nanotube film device to thiol vapor, and FIG. **7B** shows the detection of avidin (a protein) using a thiol-coated-gold-decorated film device. In this case, gold particles are first evaporated onto the nanotube film, followed by attaching a monolayer of thiol with carboxylic functional group to the gold particles. The presence of thiol modifies the electrical conductance of the nanotube device. When exposed to avidin, the carboxylic groups of the thiol molecules like to be linked to avidin molecules via carbodimide chemistry, giving rise to further change in electrical conductance of the nanotube film device. Note that in this case, the nanotube device operates in a liquid environment.

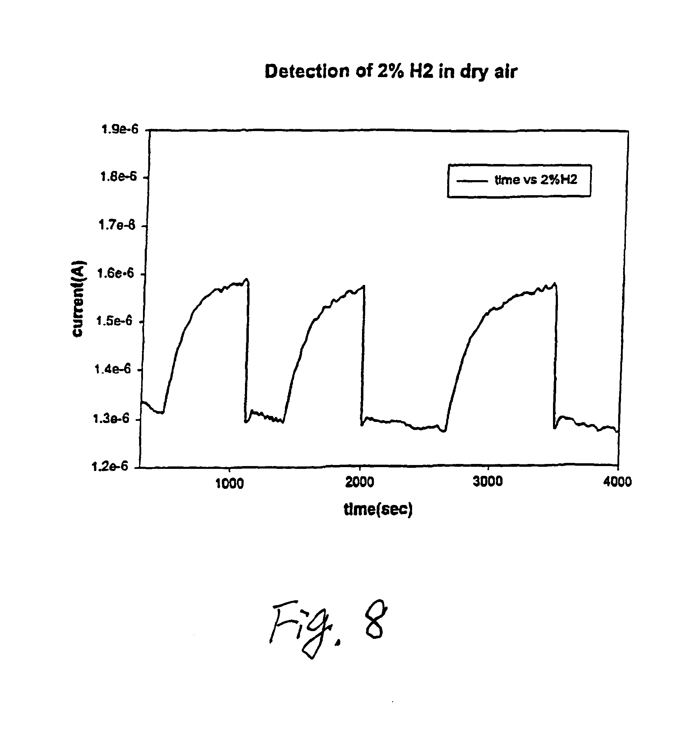

FIG. **8** shows the detection of H₂ using a platinum-modified nanotube film device. Platinum particles are deposited onto and decorate the nanotubes film. It is their presence that enables the device to respond to H₂ molecules.

Moreover, by attaching an enzyme to a nanotube or a nanotube film, the corresponding enzyme-coated nanotube device displays changes in its electrical conductance when exposed to glucose, and other biological species. This would have important implications in medicine. Sensing CO has also been achieved by using modified nanotube devices.

In additional to the sensing agents described above, other metal particles (e.g., nickel, rhodium, palladium, TiO₂), polymers, and biological species can be used as sensing agents to modify the sensitivity of nanotubes to chemical and biological species.

Clearly, the capabilities of the nanotube devices of the present invention as chemical and biological sensors are not merely limited to the exemplary embodiments described above. Furthermore, the nanotube devices of the present invention can be utilized as electrochemical, electromechanical and other functional devices.

It is also apparent to those skilled in the art that the above embodiments of the present invention are illustrative in purpose and are in no way limiting the scope of the invention. Many alternations and improvements can be introduced to the above-described embodiments without going beyond the scope of the invention. Thus, the scope of the present invention should be determined, not by examples given, but by the appended claims and their legal equivalents.

## Claims

1. A molecular sensor comprising:
a) a nanotube device comprising at least one carbon nanotube (20), wherein a first end of said nanotube (20) is in electrical contact with a first conducting element and a second end of said nanotube (20) is in electrical contact with a second conducting element; and
b) a coating of one or more sensing agents deposited on said nanotube (20); wherein said sensing agents are so chosen such that the agents-coated nanotube (20) responds to a particular molecular species.

2. The molecular sensor of claim 1, wherein said one or more sensing agents comprise one or more materials selected from the group consisting of metal particles, polymers, and biological species, wherein said group preferably includes gold, platinum, nickel, rhodium, palladium, TiO₂, thiol, and enzymes.

3. The molecular sensor of either claim 1 or claim 2, wherein said nanotube (20) is semiconducting.

4. The molecular sensor of any one of claims 1 to 3, further comprising a voltage source applying a gating voltage to said nanotube (20), wherein said gating voltage is so chosen such that said nanotube (20) biased with said gating voltage responds to a particular molecular species.

5. The molecular sensor of claim 4, wherein said gating voltage is in the range of -20 to 20 Volts.

6. The molecular sensor of any one of claims 1 to 5, wherein said at least one nanotube (20) is a single-walled nanotube.

7. The molecular sensor of any one of claims 1 to 6, wherein at least one of said conducting elements comprises an island (21) of a catalyst material covered by a metal electrode (23), and wherein at least one of said ends of said nanotube (20) is rooted in said catalyst island (21) and covered by said metal electrode (23).

8. The molecular sensor of claim 7, wherein said metal electrode (23) comprises an alloy of nickel-gold or titanium-gold.

9. The molecular sensor of either claim 7 or claim 8, wherein said catalyst material is selected from a groups consisting of iron, molybdenum, cobalt, nickel, ruthenium, zinc and oxides thereof.

10. The molecular senor of either claim 7 or claim 8, wherein said catalyst material comprises Fe₂O₃ and alumina nanoparticles.

11. The molecular sensor of any one of claims 7 to 10, wherein said catalyst island (21) is in the range of 3-5 microns in size.

12. The molecular sensor of any one of claims 1 to 6, wherein at least one of said conducting elements comprises a metal pad (33) covering at least one of said ends of said nanotube (20), and said metal pad (33) comprises a material selected from the group consisting of titanium, gold, aluminium, chromium, and platinum.

## Patentansprüche

1. Molekularer Sensor, umfassend:
a) eine Nanoröhren-Vorrichtung, die wenigstens eine Kohlenstoffnanoröhre (20) umfasst, wobei ein erstes Ende der Nanoröhre (20) mit einem ersten leitenden Element in elektrischem Kontakt ist und ein zweites Ende der Nanoröhre (20) mit einem zweiten leitenden Element in elektrischem Kontakt ist; und
b) eine auf der Nanoröhre (20) aufgebrachte Beschichtung aus einem oder mehreren Sensorstoffen, wobei die Sensorstoffe so gewählt sind, dass die stoffbeschichtete Nanoröhre (20) auf eine bestimmte molekulare Spezies anspricht.

2. Molekularer Sensor nach Anspruch 1, wobei der eine oder die mehreren Sensorstoffe eine oder mehrere Substanzen umfassen, die aus der der Gruppe bestehend aus Metallpartikeln, Polymeren und biologischen Spezies ausgewählt sind, wobei diese Gruppe vorzugsweise Gold, Platin, Nickel, Rhodium, Palladium, TiO₂, Thiol und Enzyme einschließt.

3. Molekularer Sensor nach entweder Anspruch 1 oder Anspruch 2, wobei die Nanoröhre (20) halbleitend ist.

4. Molekularer Sensor nach einem der Ansprüche 1 bis 3, der außerdem eine Spannungsquelle umfasst, die eine Gate-Spannung an die Nanoröhre (20) anlegt, wobei die Gate-Spannung so gewählt ist, dass die mit dieser Gate-Spannung vorgespannte Nanoröhre (20) auf eine bestimmte molekulare Spezies anspricht.

5. Molekularer Sensor nach Anspruch 4, wobei die Gate-Spannung im Bereich von -20 bis 20 Volt liegt.

6. Molekularer Sensor nach einem der Ansprüche 1 bis 5, wobei die wenigstens eine Nanoröhre (20) eine einwandige Nanoröhre ist.

7. Molekularer Sensor nach einem der Ansprüche 1 bis 6, wobei wenigstens eines der leitenden Elemente eine Insel (21) aus einem Katalysatormaterial umfasst, die von einer Metallelektrode (23) bedeckt wird, und wobei wenigstens eines der Enden der Nanoröhre (20) in der Katalysatorinsel (21) verwurzelt ist und von der Metallelektrode (23) bedeckt wird.

8. Molekularer Sensor nach Anspruch 7, wobei die Metallelektrode (23) eine Nickel-Gold- oder Titan-Gold-Legierung umfasst.

9. Molekularer Sensor nach entweder Anspruch 7 oder Anspruch 8, wobei das Katalysatormaterial aus einer Gruppe bestehend aus Eisen, Molybdän, Cobalt, Nickel, Ruthenium, Zink und deren Oxiden ausgewählt ist.

10. Molekularer Sensor nach entweder Anspruch 7 oder Anspruch 8, wobei das Katalysatormaterial Fe₂O₃ und Aluminiumoxid-Nanopartikel umfasst.

11. Molekularer Sensor nach einem der Ansprüche 7 bis 10, wobei die Katalysatorinsel (21) in der Größe im Bereich von 3-5 Mikrometern liegt.

12. Molekularer Sensor nach einem der Ansprüche 1 bis 6, wobei wenigstens eines der leitenden Elemente eine Metall-Kontaktierungsstelle (33) umfasst, die wenigstens eines der Enden der Nanoröhre (20) bedeckt, und die Metall-Kontaktierungsstelle (33) ein Material umfasst, das aus der Gruppe bestehend aus Titan, Gold, Aluminium, Chrom und Platin ausgewählt ist.

## Revendications

1. Capteur moléculaire comprenant :
a) un dispositif de nanotubes comportant au moins un nanotube de carbone (20), dans lequel une première extrémité dudit nanotube (20) est en contact électrique avec un premier élément conducteur et une seconde extrémité dudit nanotube (20) est en contact électrique avec un second élément conducteur ; et
b) un revêtement d'un ou de plusieurs agent(s) de détection déposé(s) sur ledit nanotube (20) ; dans lequel lesdits agents de détection sont choisis de façon que le nanotube revêtu des agents (20) réponde à une espèce moléculaire particulière.

2. Capteur moléculaire selon la revendication 1, dans lequel ledit ou lesdits agent(s) de détection comporte(nt) un ou plusieurs matériau(x) sélectionné(s) à partir du groupe constitué de particules métalliques, de polymères et d'espèces biologiques, dans lequel ledit groupe comporte, de préférence, l'or, le platine, le nickel, le rhodium, le palladium, le TiO₂, un thiol et des enzymes.

3. Capteur moléculaire selon l'une ou l'autre des revendications 1 ou 2, dans lequel ledit nanotube (20) est semi-conducteur.

4. Capteur moléculaire selon l'une quelconque des revendications 1 à 3 comportant, de plus, une source de tension appliquant une tension de déclenchement audit nanotube (20), dans lequel ladite tension de déclenchement est choisie de telle sorte que ledit nanotube (20) polarisé avec ladite tension de déclenchement réponde à une espèce moléculaire particulière.

5. Capteur moléculaire selon la revendication 4, dans lequel ladite tension de déclenchement se situe dans la plage de -20 à 20 volts.

6. Capteur moléculaire selon l'une quelconque des revendications 1 à 5 dans lequel ledit (lesdits) nanotube(s) (20) est (sont) un (des) nanotube(s) à paroi unique.

7. Capteur moléculaire selon l'une quelconque des revendications 1 à 6, dans lequel l'un au moins desdits éléments conducteurs comprend un îlot (21) de matériau catalyseur recouvert d'une électrode métallique (23) et dans lequel au moins l'une desdites extrémités dudit nanotube (20) est enracinée dans ledit îlot catalyseur (21) et recouvert par ladite électrode métallique (23).

8. Capteur moléculaire selon la revendication 7 dans lequel ladite électrode métallique (23) comprend un alliage d'or et de nickel ou d'or et de titane.

9. Capteur moléculaire selon l'une ou l'autre des revendications 7 ou 8, dans lequel ledit matériau catalyseur est sélectionné à partir d'un groupe constitué de fer, de molybdène, de cobalt, de nickel, de ruthénium, de zinc et de leurs oxydes.

10. Capteur moléculaire selon l'une ou l'autre des revendications 7 ou 8, dans lequel ledit matériau catalyseur comprend des nanoparticules de Fe₂O₃ et d'alumine.

11. Capteur moléculaire selon l'une quelconque des revendications 7 à 10 dans lequel ledit îlot catalyseur (21) se situe dans une plage de dimension de 3 à 5 microns.

12. Capteur moléculaire selon l'une quelconque des revendications 1 à 6 dans lequel l'un au moins desdits éléments conducteurs comprend un plot métallique (33) recouvrant l'une au moins desdites extrémités dudit nanotube (20), et ledit plot métallique (33) et constitué d'un matériau sélectionné à partir du groupe constitué de titane, d'or, d'aluminium, de chrome et de platine.
